# FASCICULE DE BREVET EUROPEEN

(11) **EP 2 460 330 B1**
(45) Date de publication et mention de la délivrance du brevet: **07.03.2018**
(21) Numéro de dépôt: 10728712.0
(22) Date de dépôt: 07.07.2010
(51) Int. Cl.: H04L 29/06

(54) **PROCEDE DE DIFFUSION DE DONNEES PAR UN SERVEUR VERS DES TERMINAUX UTILISATEURS**
VERFAHREN ZUR DATENRUNDSENDUNG ZWISCHEN ANBIETER UND ENDGERÄTE
METHOD FOR DATA BROADCASTING FROM A SERVER TO USER TERMINALS

(30) Priorité: 29.07.2009 FR 0955315
(43) Date de publication de la demande: 06.06.2012
(73) Titulaire: Eutelsat SA, 75015 Paris (FR)
(72) Inventeur: ARCIDIACONO, Antonio, F-75016 Paris (FR); FINOCCHIARO, Daniele, Vito, F-75015 Paris (FR); GRAZZINI, Sébastien, F-75015 Paris (FR); BRUNELLE, Alexandre, F-75015 Paris (FR)
(74) Mandataire: Lebkiri, Alexandre
(86) Numéro de dépôt international: PCT/EP2010/059765
(87) Numéro de publication internationale: WO 2011/012416

(56) Documents cités:
- US-A1- 2001 014 103
- US-A1- 2002 129 116
- US-A1- 2004 068 570
- US-A1- 2008 117 920
- US-B1- 6 760 757

## Description

Le document US 2008/117920 A1 concerne une passerelle de collecte et d'harmonisation de contenu. Le document US 2004/068570 A1 concerne un support lisible par un processeur pour le téléchargement d'information à l'intérieur d'un intervalle de temps prédéterminé vers un dispositif dans un réseau adapté à la sélection de prix.

La présente invention concerne un procédé de diffusion de données par un serveur push vers des terminaux utilisateurs via un dispositif d'interface. L'invention trouve une application particulièrement intéressante dans le cadre de la diffusion d'applications et de contenus vers des terminaux utilisateurs mobiles via un satellite.

Dans le cas de système de télécommunication satellitaire large bande (« broadband » en anglais) à haut débit, le satellite peut être utilisé de façon bidirectionnelle, c'est-à-dire à la fois pour :
- relayer des données émises par une station terrestre principale (reliée à un centre d'exploitation du réseau ou NOC « Network Operating Center ») vers une pluralité de terminaux terrestres : cette première liaison de type point à multipoints constitue la voie aller (« forward link » en anglais) ;
- relayer vers la station terrestre principale les données émises par les terminaux terrestres : cette deuxième liaison, de type multipoints à point, constitue la voie retour (« return link » en anglais).

Certains satellites (c'est le cas notamment de satellites en bande S) sont aujourd'hui susceptibles d'intégrer une charge utile permettant d'assurer la distribution d'applications et de contenus vers des terminaux mobiles portables et des véhicules.

Une telle configuration est cependant susceptible de poser deux difficultés majeures.

Un premier problème concerne la multitude de terminaux mobiles sur le marché qui implique qu'un développeur d'applications doit adapter ses services à chaque terminal.

Une solution connue à ce premier problème consiste à utiliser des « web applications » fournies à travers un navigateur web. Ces dernières permettent aux développeurs d'applications de fournir un service sans se soucier de la machine sur laquelle va être utilisé le service. Un exemple d'une telle solution est l'application GMail™ qui permet de consulter ses emails, de les classer ou d'envoyer ses emails. GMail™ est une application très performante qui égale certains clients de messagerie classique et peut être utilisée sur n'importe quel terminal proposant un navigateur web performant (PC, Mac, Smartphone,...).

La principale contrainte des « web applications » est qu'il est impératif d'être connecté à Internet pour accéder au service, contrairement aux logiciels stockés sur le terminal qui ne nécessitent pas de connectivité.

Le second problème posé par la distribution d'applications et de contenus par satellite vers des terminaux mobiles portables et des véhicules réside dans le fait qu'il existe très peu de terminaux mobiles capables de recevoir directement le signal émis par un satellite.

Dans ce contexte, la présente invention vise à fournir un procédé de diffusion de données par un serveur push vers des terminaux utilisateurs via un dispositif d'interface, ledit procédé permettant de toucher le plus de terminaux possibles, y-compris les terminaux qui ne sont pas adaptés pour recevoir des signaux satellitaires, tout en masquant les spécificités de chaque terminal aux yeux des développeurs d'applications en leur ouvrant la possibilité d'atteindre une grande population de terminaux sans multiplier les efforts de développement.

A cette fin, l'invention propose un procédé de diffusion de données par un serveur push vers des terminaux utilisateurs via un dispositif d'interface, lesdites données envoyées par le serveur push transitant par un système de distribution permettant la diffusion des données dudit serveur push vers ledit dispositif d'interface,
ledit dispositif d'interface comportant :
- des moyens de réception aptes à recevoir en mode push des données émises en multicast par ledit système de distribution ;
- des moyens de stockage desdites données ;
- un serveur Web ;
- des moyens de connexion aptes à établir une connexion locale sans fil avec des terminaux utilisateurs ;
ledit procédé comportant les étapes suivantes :
- transmission par le serveur push d'un flux de données de contenus et d'applications Web vers le système de distribution ;
- diffusion en multicast par le système de distribution du flux de données de contenus et d'applications Web vers ledit dispositif d'interface ;
- réception desdites données et d'applications Web par les moyens de réception aptes à recevoir en mode push;
- stockage desdites données et d'applications Web dans lesdits moyens de stockage ;
- connexion locale sans fil d'un terminal muni d'un navigateur Web au dit dispositif d'interface ;
- transmission d'une requête HTTP dudit terminal vers ledit serveur Web, ladite requête demandant l'exécution d'une desdites applications stockées sur lesdits moyens de stockage ;
- fourniture de l'application demandée dans le navigateur Web dudit terminal.

Le terminal utilisateur est préférentiellement un terminal portable tel qu'un PMP (« Portable Multimedia Player »), un PDA (« Personal Digital Assistant »), un PND (« Personal navigation device ») ou un téléphone mobile.

Le terme « diffusion multicast » englobe une diffusion qui peut être du type « broadcast » (diffusion globale d'un même flux de données à tous les dispositifs d'interface) ou du type « multicast » avec par exemple un premier type de données envoyé globalement à un premier groupe de dispositifs d'interface (par exemple des dispositifs grand public) et un deuxième type de données différent du premier type envoyé à un deuxième groupe de dispositifs d'interface (par exemple des dispositifs d'interface professionnels).

Grâce à l'invention, il est possible de lancer des services mobiles, notamment via un système de distribution tel qu'un satellite, sans que les terminaux utilisateurs soient compatibles avec ce système de distribution. Les terminaux utilisateurs n'ont pas besoin d'être compatibles avec la réception du signal satellite puisqu'ils sont connectés à un dispositif d'interface (désigné indifféremment par le terme « passerelle intelligente » par la suite) par l'intermédiaire d'un réseau sans fil local du type WiFi.

En outre, le terminal peut, grâce au procédé selon l'invention, avoir accès aux services alors que le dispositif d'interface est hors de la zone de couverture permettant la réception des données diffusées en multicast par le système de distribution du flux de données. Le dispositif d'interface fait office de mémoire tampon via ses moyens de stockage dans lesquels les données sont stockées ; ces données sont rendues accessibles aux terminaux via une connexion sans fil entre les terminaux et le dispositif d'interface, même en l'absence de couverture (par exemple en l'absence de couverture satellite).

De plus, les applications étant exécutées à travers le navigateur Internet du terminal, il n'est plus nécessaire de développer plusieurs versions des applications pour que ces dernières soient compatibles avec les différents terminaux présents sur le marché.

Enfin, cette solution optimise la bande passante satellitaire utilisée puisque les applications et les données sont envoyées par une liaison de type multicast (très adaptée aux télécommunications par satellite).

Il convient de noter que le dispositif d'interface selon l'invention est un dispositif intelligent. En d'autres termes, il ne se contente pas de capter des signaux qui arrivent d'un satellite ou d'un émetteur terrestre, de transformer ces signaux en signaux WiFi pour les retransmettre immédiatement à un terminal mobile. Le dispositif d'interface « écoute » et reçoit en permanence ce qui est diffusé par le serveur push ; il stocke ce contenu et le rend accessible (tant que le contenu est stocké) aux terminaux utilisateurs qui se connectent au dispositif d'interface via le réseau local sans fil.

Le procédé selon l'invention peut également présenter une ou plusieurs des caractéristiques ci-dessous, considérées individuellement ou selon toutes les combinaisons techniquement possibles :
- la liaison entre le dispositif d'interface et le serveur push est une liaison bidirectionnelle ;
- ledit système de distribution est un satellite de télécommunications ;
- la liaison entre le serveur push et le dispositif d'interface est une liaison radiofréquences entre une station terrestre principale à laquelle est relié le serveur push et le dispositif d'interface via un satellite de télécommunication ;

- le satellite est utilisé de façon bidirectionnelle de sorte que l'émission de données du serveur push vers le dispositif d'interface est réalisée en utilisant la voie aller du satellite relayant les données émises par la station terrestre principale vers le dispositif d'interface et l'émission de données du dispositif d'interface vers ledit serveur push est réalisée en utilisant la voie retour du satellite relayant les données émises par le dispositif d'interface vers la station terrestre principale ;
- lesdites données sont des données de deux types :
   ∘ des données de contenus intégrées dans des fichiers multimédias ;
   ∘ des applications Web destinées à être exécutées localement sur le terminal utilisateur ;
- la diffusion en multicast par le système de distribution du flux de données de contenus et de données d'applications Web est réalisée vers une pluralité de dispositifs d'interface, chaque dispositif d'interface assurant la distribution de ces données vers les terminaux utilisateurs connectés à ce dispositif d'interface via sa connexion locale sans fil.

La présente invention a également pour objet un dispositif d'interface pour la mise en oeuvre du procédé selon l'invention caractérisé en ce qu'il comporte :
- des moyens de réception aptes à recevoir en mode push des données émises en multicast par ledit système de distribution ;
- des moyens de stockage desdites données ;
- un serveur Web ;
- des moyens de connexion aptes à établir une connexion locale sans fil avec des terminaux utilisateurs.

Le dispositif selon l'invention peut également présenter une ou plusieurs des caractéristiques ci-dessous, considérées individuellement ou selon toutes les combinaisons techniquement possibles :
- le dispositif selon l'invention comporte des moyens d'émission aptes à émettre des données vers ledit serveur push ;
- le dispositif selon l'invention comporte des moyens de routage aptes à router les données stockées vers un terminal utilisateur connecté au dit dispositif d'interface via lesdits moyens de connexion ;
- le dispositif selon l'invention comporte une antenne satellitaire ;
- les moyens de connexion aptes à établir une connexion locale sans fil avec des terminaux utilisateurs sont formés par des moyens de connexion WiFi, WiMax, BlueTooth ou d'autres types de connexion sans fil.

La présente invention a également pour objet un véhicule automobile intégrant un dispositif d'interface selon l'invention.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique simplifiée d'une architecture de diffusion pour la mise en oeuvre du procédé selon l'invention ;
- la figure 2 est une représentation schématique simplifiée d'un dispositif d'interface selon l'invention.

Dans toutes les figures, les éléments communs portent les mêmes numéros de référence.

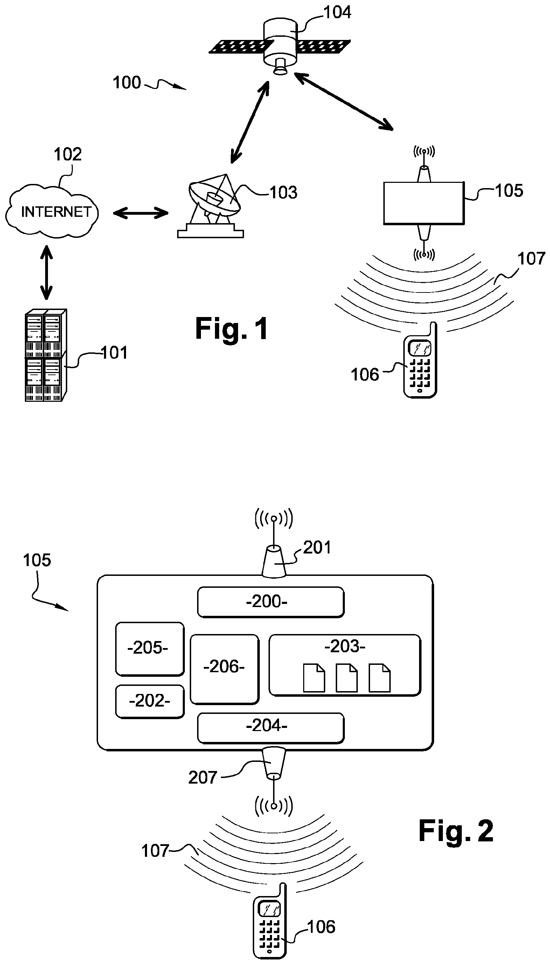

La figure 1 est une représentation schématique simplifiée d'une architecture 100 de diffusion pour la mise en oeuvre du procédé selon l'invention.

L'architecture 100 comporte principalement :
- un serveur émettant en mode push 101 (ici un seul serveur est représenté mais on peut également avoir plusieurs serveurs) échangeant des données de manière bidirectionnelle (typiquement via le réseau Internet 102) avec une station terrestre principale de télécommunication 103 (« gateway » ou « hub » en anglais) ;
- un système de distribution de données tel qu'un satellite de télécommunications 104 échangeant des données de manière bidirectionnelle avec la station terrestre 103 ;
- une passerelle intelligente (ou dispositif d'interface) 105 qui sera décrit plus en détails en référence à la figure 2, le satellite 104 communiquant de manière bidirectionnelle avec le dispositif d'interface 105 ;
- des terminaux mobiles utilisateurs 106 (un seul est représenté) tels qu'un PMP (« Portable Multimedia Player »), un PDA (« Personal Digital Assistant ») ou un téléphone mobile, les terminaux mobiles utilisateurs 106 communicant avec le dispositif d'interface 105 via un réseau local sans fil 107 du type WiFi, WiMax ou BlueTooth.

La figure 2 est une représentation schématique simplifiée de la passerelle intelligente 105 selon l'invention.

La passerelle intelligente 105 comporte :
- des moyens 200 de connexion satellitaire équipés d'une antenne satellitaire 201 ;
- des moyens de stockage de données 202 ;
- un serveur Web 203 ;
- des moyens 204 de connexion sans fil au réseau local 107 équipés d'une antenne 207 (typiquement, il peut s'agir d'une connexion de type WiFi, WiMax ou BlueTooth) ;
- des moyens 205 clients de réception de flux de données en mode push ;
- des moyens 206 de routage de flux de données audio/vidéo.

Le serveur 101 transmet des données en mode push ; en d'autres termes, les données sont « poussées » de manière périodique vers la passerelle intelligente 105. Pour ce faire, les données transitent par la station terrestre 103 puis sont diffusées en multicast par le satellite 104 vers une pluralité de passerelles intelligentes 105 (i.e. les données sont envoyées par le satellite pour atteindre potentiellement toutes les passerelles intelligentes connectées). La diffusion multicast permet d'optimiser le coût de la liaison satellite : on diffuse en une fois les mêmes données vers une pluralité de passerelles 105. Nous traiterons dans ce qui suit le cas d'une passerelle 105 recevant ces données. Le serveur 101 et la station terrestre 103 sont par exemple reliés via le réseau Internet 102.

Les données sont essentiellement de deux types :
- du contenu sous forme de fichiers multimédias ;
- des applications web destinées à être exécutées localement sur les terminaux utilisateurs.

La passerelle intelligente 105 reçoit les données transmises par le serveur push 101 : les données sont reçues par les moyens 205 clients de réception de flux de données en mode push qui les enregistrent dans les moyens 202 de stockage en respectant une arborescence de fichiers définie par le serveur Web HTTP 203.

Le principe de la diffusion de contenus en mode push est qu'il n'y a pas de connexion à initier. Pour ce faire, les moyens 205 clients de réception de flux de données en mode push intègrent des moyens logiciels qui écoutent et reçoivent en permanence ce qui est diffusé. Une application de base de type « portail » est installée à l'origine au niveau du serveur Web 203. La connexion au serveur Web 203 dirige toujours vers ce portail. Ce portail est une application qui « scanne » le contenu des répertoires et donne accès aux applications transmises par le serveur push 101 et présentes dans le dispositif 105. Ainsi, lorsque le client push reçoit une nouvelle application, le simple fait de la stocker dans les moyens de stockage la rend accessible aux terminaux utilisateurs 106 à travers le portail.

Ainsi, les terminaux 106 utilisés par le client final n'ont pas besoin d'être compatibles avec la réception du signal satellite puisqu'ils sont connectés aux moyens 204 de connexion sans fil de la passerelle 105 par l'intermédiaire d'un réseau sans fil local 107.

La communication entre le serveur Web 203 et un terminal utilisateur 106 connecté à la passerelle 105 est basée sur le protocole HTTP (« Hyper Text Transfer Protocol » en anglais). Ce protocole permet au terminal 106 d'accéder à des applications, typiquement des pages Web au format HTML (« Hyper Text Markup Language » en anglais) ou des pages Web dynamiques au format PHP (« Hypertext Preprocessor » en anglais). Le terminal utilisateur 106 doit être équipé d'une ressource spécifique, appelée navigateur (« Browser » en anglais), qui est le logiciel client capable d'interroger le serveur Web 203, d'exploiter ses résultats et de mettre en page les informations grâce aux informations contenues dans les pages HTML ou PHP.

De façon générale, un terminal utilisateur 106 se connecte au serveur Web 203 de la passerelle intelligente 105 et jamais directement au serveur 101.

De plus, les applications étant exécutées à travers le navigateur internet du terminal 106, il n'est plus nécessaire de développer plusieurs versions des applications qui soient compatibles avec les différents terminaux présents sur le marché.

Typiquement, la fourniture d'une application de musique à la demande en utilisant la passerelle intelligente 105 comporte les étapes suivantes :
- Diffusion par le serveur 101 du contenu de l'offre en utilisant les liaisons de la station terrestre 103 vers le satellite 104 et du satellite 104 vers la passerelle intelligente 105 (Les musiques sont stockées dans les moyens 202 de stockage).
- Diffusion de l'application web en utilisant les liaisons de la station terrestre 103 vers le satellite 104 et du satellite 104 vers la passerelle intelligente 105 (L'application est également stockée dans les moyens 202 de stockage).
- A la demande d'un terminal 106 connecté à la passerelle intelligente 105 (par exemple en WiFi), le serveur http 203 exécute l'application web. Cette application est exécutée dans le navigateur Internet du terminal 106. L'utilisateur final peut ainsi écouter les musiques stockées sous forme de fichiers multimédias dans la passerelle intelligente 105.

Les données de contenus sont susceptibles d'être mises à jour régulièrement par le serveur 101. Par exemple, dans le cas d'une application météo, les données météorologiques sont mises à jour par le serveur 101 et stockées dans la passerelle 105.

On notera que la liaison entre la passerelle intelligente 105 et le satellite 104 est une liaison bidirectionnelle de sorte que la passerelle 105 est susceptible de transmettre des données transitant par le satellite 104 vers le serveur 101. Ces données peuvent par exemple être des données permettant la facturation des utilisateurs des terminaux 106. Nous avons donc considéré dans ce qui précède que la communication entre la passerelle 105 et le serveur 101 est bidirectionnelle et utilise les voies aller et retour du satellite 104. Il existe toutefois deux variantes possibles :
- le lien entre le serveur 101 et la passerelle 105 peut être unidirectionnel. Dans ce cas, la passerelle 105 peut uniquement recevoir des informations mais ne peut pas en renvoyer. Cette solution est possible car de nombreuses applications ne nécessitent pas de voie de retour (typiquement une application météo) ;
- Le lien entre le serveur 101 et la passerelle 105 est hybride : le satellite est alors utilisé comme moyen de diffusion alors qu'un autre type de liaison, par exemple du type GPRS, est utilisé pour permettre à la passerelle 105 de renvoyer des données vers le serveur 101. Dans ce cas, il conviendra par exemple de prévoir un emplacement pour une carte de type SIM (« Subscriber Identity Module » en anglais) dans le boîtier de la passerelle 105.

Une application particulièrement intéressante du procédé selon l'invention consiste à installer la passerelle intelligente 105 sous la forme d'un boîtier à bord d'un véhicule automobile. Dès lors, la passerelle 105 permettra aux occupants du véhicule de profiter de la connectivité en utilisant leurs propres terminaux. Il suffira par exemple de connecter son téléphone mobile à la passerelle embarquée dans son automobile pour consulter la météo, utiliser des services de musique à la demande ou regarder la télévision par satellite.

Concernant la possibilité de regarder la télévision par satellite, on notera que la passerelle intelligente 105 est également équipée d'un routeur multicast 206 de flux de données audio/vidéo. Ainsi, la passerelle intelligente reçoit des flux audio/vidéos provenant du serveur 101 via le satellite 104 et ces flux audio/vidéos sont renvoyés en live (i.e. sans être stockés dans les moyens de stockage 202) vers les terminaux 106 connectés à la passerelle intelligente à l'aide du routeur 206 via les moyens de connectivité sans fil 204. Le rôle du routeur 206 est donc de rediriger le flux vers les mobiles utilisateurs 106. Il sera utilisé uniquement pour les flux audio et vidéo live (par exemple pour permettre à un utilisateur de regarder une chaîne de télévision sur son mobile).

Le procédé et le dispositif de passerelle selon l'invention permettent d'optimiser la bande passante satellitaire utilisée puisque les applications et les données sont envoyées par une liaison de type multicast (très adaptée aux télécommunications par satellite), la voie de retour étant utilisée avec parcimonie en cas de nécessité.

Bien entendu, l'invention n'est pas limitée au mode de réalisation qui vient d'être décrit.

Ainsi, l'invention a été plus particulièrement décrite dans le cas où le système de distribution est un satellite. Même si l'invention est plus particulièrement adaptée à la diffusion multicast par satellite, il est également possible d'utiliser l'invention en remplaçant le satellite par n'importe quel média permettant la diffusion de données. Par exemple, nous pourrions aussi utiliser la télévision numérique terrestre ou TNT en tant que système de distribution à la place du satellite.

## Revendications

1. Procédé de diffusion de données par un serveur push (101) vers des terminaux utilisateurs (106) via un dispositif d'interface (105), lesdites données envoyées par le serveur push (101) transitant par un système de distribution (104) permettant la diffusion des données dudit serveur push (101) vers ledit dispositif d'interface (105),
ledit dispositif d'interface (105) comportant :
- des moyens (200, 201) de réception aptes à recevoir en mode push des données émises en multicast par ledit système de distribution (104) ;
- des moyens (202) de stockage desdites données ;
- un serveur Web (203) ;
- des moyens (204, 207) de connexion aptes à établir une connexion locale sans fil avec des terminaux utilisateurs (106) ;
ledit procédé comportant les étapes suivantes :
- transmission par le serveur push (101) d'un flux de données de contenus et d'applications Web vers le système de distribution (104) ;
- diffusion en multicast par le système de distribution (104) du flux de données de contenus et d'applications Web vers ledit dispositif d'interface (105) ;
- réception desdites données et d'applications Web par les moyens de réception (200, 201) aptes à recevoir en mode push;
- stockage desdites données et d'applications Web dans lesdits moyens (202) de stockage ;
- connexion locale sans fil d'un terminal (106) muni d'un navigateur Web au dit dispositif d'interface (105) ;
- transmission d'une requête HTTP dudit terminal (106) vers ledit serveur Web (203), ladite requête demandant l'exécution d'une desdites applications stockées sur lesdits moyens (202) de stockage ;
- fourniture de l'application demandée dans le navigateur Web dudit terminal (106).

2. Procédé selon la revendication 1 **caractérisé en ce que** la liaison entre le dispositif d'interface (105) et le serveur push (101) est une liaison bidirectionnelle.

3. Procédé selon l'une des revendications précédentes **caractérisé en ce que** ledit système de distribution est un satellite (104) de télécommunications.

4. Procédé selon la revendication précédente **caractérisé en ce que** la liaison entre le serveur push (101) et le dispositif d'interface (105) est une liaison radiofréquences entre une station terrestre principale (103) à laquelle est relié le serveur push (101) et le dispositif d'interface (105) via un satellite (104) de télécommunications.

5. Procédé selon la revendication 4 **caractérisé en ce que** le satellite est utilisé de façon bidirectionnelle de sorte que l'émission de données du serveur push (101) vers le dispositif d'interface (105) est réalisée en utilisant la voie aller du satellite (104) relayant les données émises par la station terrestre principale (103) vers le dispositif d'interface (105) et l'émission de données du dispositif d'interface (105) vers ledit serveur push (101) est réalisée en utilisant la voie retour du satellite (104) relayant les données émises par le dispositif d'interface (105) vers la station terrestre principale (103).

6. Procédé selon l'une des revendications précédentes **caractérisé en ce que** lesdites données sont de deux types :
- des données de contenus intégrées dans des fichiers multimédias ;
- des applications Web destinées à être exécutées localement sur le terminal utilisateur.

7. Procédé selon l'une des revendications précédentes **caractérisé en ce que** la diffusion en multicast par le système de distribution (104) du flux de données de contenus et d'applications Web est réalisée vers une pluralité de dispositifs d'interface (105), chaque dispositif d'interface assurant la distribution de ces données vers les terminaux utilisateurs (106) connectés à ce dispositif d'interface (105) via la connexion locale sans fil.

8. Dispositif d'interface (105) pour la mise en oeuvre du procédé selon l'une des revendications 1 à 7 **caractérisé en ce qu'**il comporte :
- des moyens (200, 201) de réception aptes à recevoir en mode push des données émises en multicast par ledit système de distribution (104) ;
- des moyens (202) de stockage desdites données ;
- un serveur Web (203) ;
- des moyens (204, 207) de connexion aptes à établir une connexion locale sans fil avec des terminaux utilisateurs (106).

9. Dispositif (105) selon la revendication précédente **caractérisé en ce qu'**il comporte des moyens d'émission aptes à émettre des données vers ledit serveur push.

10. Dispositif (105) selon l'une des revendications 8 ou 9 **caractérisé en ce qu'**il comporte des moyens (206) de routage aptes à router les données reçues vers un terminal utilisateur (106) connecté au dit dispositif d'interface (105) via lesdits moyens (204, 207) de connexion sans fil.

11. Dispositif (105) selon l'une des revendications 8 à 10 **caractérisé en ce qu'**il comporte une antenne satellitaire (201).

12. Dispositif selon l'une des revendications 8 à 11 **caractérisé en ce que** les moyens (204, 207) de connexion aptes à établir une connexion locale sans fil avec des terminaux utilisateurs sont formés par des moyens de connexion WiFi, WiMax ou BlueTooth.

13. Véhicule automobile intégrant un dispositif d'interface (105) selon l'une des revendications 8 à 12.

## Patentansprüche

1. Verfahren zur Datenrundsendung durch einen Push-Server (101) zu Nutzerendgeräten (106) über eine Schnittstellenvorrichtung (105), wobei die von dem Push-Server (101) geschickten Daten über ein Rundsendungssystem (104) laufen, das die Rundsendung der Daten des Push-Servers (101) zu der Schnittstellenvorrichtung (105) erlaubt,
wobei die Schnittstellenvorrichtung (105) aufweist:
- Empfangsmittel (200, 201), die imstande sind, von dem Rundsendungssystem (104) im Multicast gesendete Daten im Push-Modus zu empfangen,
- Speichermittel (202) der Daten,
- einen Web-Server (203),
- Verbindungsmittel (204, 207), die imstande sind, eine drahtlose lokale Verbindung mit Nutzerendgeräten (106) herzustellen,
wobei das Verfahren die folgenden Schritte aufweist:
- Übertragen von dem Push-Server (101) eines Datenstroms von Inhalten und Webapplikationen zu dem Rundsendungssystem (104),
- Multicast-Rundsenden durch das Rundsendungssystem (104) des Datenstroms von Inhalten und Webapplikationen zu der Schnittstellenvorrichtung (105),
- Empfangen der Daten und Webapplikationen durch die Empfangsmittel (200, 201), die imstande sind, im Push-Modus zu empfangen,
- Speichern der Daten und Webapplikationen in den Speichermitteln (202),
- lokales drahtloses Verbinden eines mit einem Webbrowser ausgestatteten Endgeräts (106) mit der Schnittstellenvorrichtung (105),
- Übertragen einer http-Anfrage des Endgeräts (106) zu dem Web-Server (203), wobei die Anfrage die Ausführung einer der auf den Speichermitteln (202) gespeicherten Applikation erfordert,
- Bereitstellen der angeforderten Applikation in dem Webbrowser des Endgeräts (106).

2. Verfahren nach Anspruch 1, **dadurch gekennzeichnet, dass** die Verbindung zwischen der Schnittstellenvorrichtung (105) und dem Push-Server (101) eine bidirektionale Verbindung ist.

3. Verfahren nach einem der vorangehenden Ansprüche, **dadurch gekennzeichnet, dass** das Rundsendungssystem ein Telekommunikationssatellit (104) ist.

4. Verfahren nach vorangehendem Anspruch, **dadurch gekennzeichnet, dass** die Verbindung zwischen dem Push-Server (101) und der Schnittstellenvorrichtung (105) eine Funkfrequenzverbindung zwischen einer Bodenhauptstation (103), mit der der Push-Server (101) verbunden ist, und der Schnittstellenvorrichtung (105) über einen Telekommunikationssatelliten (104) ist.

5. Verfahren nach Anspruch 4, **dadurch gekennzeichnet, dass** der Satellit derart bidirektional genutzt wird, dass die Sendung von Daten von dem Push-Server (101) zu der Schnittstellenvorrichtung (105) durch Nutzung des Vorwärtswegs des Satelliten (104), der die durch die Hauptbodenstation (103) zu der Schnittstellenvorrichtung (105) gesendeten Daten weiterleitet, und die Sendung von Daten von der Schnittstellenvorrichtung (105) zu dem Push-Server (101) durch Nutzung des Rückwärtswegs des Satelliten (104), der die durch die Schnittstellenvorrichtung (105) gesendeten Daten zu der Hauptbodenstation (103) weiterleitet, erfolgt.

6. Verfahren nach einem der vorangehenden Ansprüche, **dadurch gekennzeichnet, dass** die Daten von zwei Typen sind:
- in Multimediadateien integrierte Inhaltsdaten,
- Webapplikationen, die bestimmt sind, lokal auf dem Nutzerendgerät ausgeführt zu werden.

7. Verfahren nach einem der vorangehenden Ansprüche, **dadurch gekennzeichnet, dass** die Multicast-Rundsendung durch das Rundsendungssystem (104) des Datenstroms von Inhalten und Webapplikationen zu einer Vielzahl von Schnittstellenvorrichtungen (105) erfolgt, wobei jede Schnittstellenvorrichtung die Rundsendung dieser Daten zu den Nutzerendgeräten (106) sichert, die mit dieser Schnittstellenvorrichtung (105) über die drahtlose lokale Verbindung verbunden sind.

8. Schnittstellenvorrichtung (105) für die Durchführung des Verfahrens nach einem der Ansprüche 1 bis 7, **dadurch gekennzeichnet, dass** sie aufweist:
- Empfangsmittel (200, 201), die imstande sind, von dem Rundsendungssystem (104) im Multicast gesendete Daten im Push-Modus zu empfangen,
- Speichermittel (202) der Daten,
- einen Web-Server (203),
- Verbindungsmittel (204, 207), die imstande sind, eine drahtlose lokale Verbindung mit Nutzerendgeräten (106) herzustellen,

9. Vorrichtung (105) nach vorangehendem Anspruch, **dadurch gekennzeichnet, dass** sie Sendemittel aufweist, die imstande sind, Daten zu dem Push-Server zu senden.

10. Vorrichtung (105) nach einem der Ansprüche 8 oder 9, **dadurch gekennzeichnet, dass** sie Routingmittel (206) aufweist, die imstande sind, die empfangenen Daten zu einem Nutzerendgerät (106) zu routen, das mit der Schnittstellenvorrichtung (105) über die drahtlosen Verbindungsmittel (204, 207) verbunden ist.

11. Vorrichtung (105) nach einem der Ansprüche 8 bis 10, **dadurch gekennzeichnet, dass** sie eine Satellitenantenne (201) aufweist.

12. Vorrichtung nach einem der Ansprüche 8 bis 11, **dadurch gekennzeichnet, dass** die Verbindungsmittel (204, 207), die imstande sind, eine lokale drahtlose Verbindung mit Nutzerendgeräten herzustellen, von WLAN-, WiMax- oder BlueTooth-Verbindungsmitteln gebildet sind.

13. Kraftfahrzeug, das eine Schnittstellenvorrichtung (105) nach einem der Ansprüche 8 bis 12 integriert.

## Claims

1. A method for a push server (101) to broadcast data to user terminals (106) via an interface device (105), said data sent by the push server (101) passing through a distribution system (104) enabling the data to be broadcast from said push server (101) to said interface device (105), said interface device (105) comprising:
- reception means (200, 201) suitable for receiving data multicast by said distribution system (104) in push mode;
- means (202) for storing said data;
- a web server (203);
- connection means (204, 207) suitable for establishing a local wireless connection with user terminals (106);
said method comprising the following steps:
- transmission by the push server (101) of a stream of content data and web application to the distribution system (104);
- multicasting by the distribution system (104) of a stream of content data and web application to said interface device (105);
- receiving said data and web application by the receiving means (200, 201) suitable for receiving in push mode;
- storage of said data and web application in said storage means (202);
- wireless local connection of a terminal (106) with a web browser to said interface device (105);
- transmission of an HTTP query from said terminal (106) to said web server (203), said query requesting the execution of one of said application stored in said storage means (202);
- providing the requested application in the web browser of said terminal (106).

2. The method according to claim 1 **characterized in that** the connection between the interface device (105) and the push server (101) is a bidirectional connection.

3. The method according to one of the previous claims **characterized in that** said distribution system is a telecommunications satellite (104).

4. The method according to the previous claim **characterized in that** the connection between the push server (101) and the interface device (105) is a radiofrequency link between a principal ground station (103) to which the push server (101) is connected and the interface device (105) via a telecommunications satellite (104).

5. The method according to claim 4 **characterized in that** the satellite is utilized bidirectionally such that the transmission of data from the push server (101) to the interface device (105) is carried out by utilizing the forward link of the satellite (104) relaying the data transmitted by the principal ground station (103) to the interface device (105) and the transmission of data from the interface device (105) to said push server (101) is carried out by utilizing the return link of the satellite (104) relaying the data transmitted by the interface device (105) to the principal ground station (103).

6. The method according to one of the previous claims **characterized in that** said data are of two types:
- content data integrated into multimedia files;
- web applications intended to be executed locally on the user terminal.

7. The method according to one of the previous claims **characterized in that** the multicast broadcasting by the distribution system (104) of the stream of content data and web applications is done to a plurality of interface devices (105), each interface device ensuring the distribution of these data to user terminals (106) connected to this interface device (105) via its local wireless connection.

8. The interface device (105) for implementing the method according to one of claims 1 to 7 **characterized in that** the device comprises:
- reception means (200, 201) suitable for receiving data multicast by said distribution system (104) in push mode;
- means (202) for storing said data;
- a web server (203);
- connection means (204, 207) suitable for establishing a local wireless connection with user terminals (106).

9. The device (105) according to the previous claim **characterized in that** the device comprises transmission means suitable for transmitting data to said push server.

10. The device (105) according to one of claims 8 or 9 **characterized in that** the device comprises routing means (206) suitable for routing the data received to a user terminal (106) connected to said interface device (105) via said wireless connection means (204, 207) .

11. The device (105) according to one of claims 8 to 10 **characterized in that** the device comprises a satellite antenna (201) .

12. The device according to one of claims 8 to 11 **characterized in that** the connection means (204, 207) suitable for establishing a local wireless connection with the user terminals are formed by WiFi, WiMax or BlueTooth connection means.

13. An automobile integrating an interface device (105) according to one of claims 8 to 12.
